# EUROPÄISCHE PATENTSCHRIFT

(11) **EP 1 728 305 B1**
(45) Veröffentlichungstag und Bekanntmachung des Hinweises auf die Patenterteilung: **14.11.2007**
(21) Anmeldenummer: 05716073.1
(22) Anmeldetag: 15.03.2005
(51) Int. Cl.: H02J 7/00

(54) **VORRICHTUNG ZUR LADEVERTEILUNG UND BERWACHUNG VON MEHREREN AKKUMULATOREN**
DEVICE FOR DISTRIBUTING CHARGE AND MONITORING SEVERAL ACCUMULATORS
DISPOSITIF POUR REPARTIR LA CHARGE ET SURVEILLLER PLUSIEURS ACCUMULATEURS

(30) Priorität: 17.03.2004 DE 102004013351
(43) Veröffentlichungstag der Anmeldung: 06.12.2006
(73) Patentinhaber: Effekta Regeltechnik GmbH, 88069 Tettnang (DE)
(72) Erfinder: HIRT, Wolfgang-Andreas, 88099 Neukirch (DE)
(74) Vertreter: Riebling, Peter
(86) Internationale Anmeldenummer: PCT/EP2005/002743
(87) Internationale Veröffentlichungsnummer: WO 2005/091461

(56) Entgegenhaltungen:
- EP-A- 0 188 477
- EP-A- 0 498 679
- EP-A- 0 814 556
- EP-A- 1 220 414
- EP-A- 1 341 286
- US-A- 4 191 918
- US-A- 5 578 914

## Beschreibung

Gegenstand der Erfindung ist eine Vorrichtung zur Ladeverteilung und Überwachung von mehreren Akkumulatoren nach dem Oberbegriff des Patentanspruchs 1.

Mit dem Gegenstand der US 6,373,225 B1 ist es bekannt, eine Serienschaltung von einzelnen Akkus in ihrem Ladezustand zu überwachen. Jedem zu überwachenden Akku wird ein Akku-Modul parallel geschaltet, das somit an die jeweiligen Anschlussklemmen des einzelnen Akkus angeschaltet ist. Jedem Akku ist somit ein Akku-Modul zugeordnet.

Aus der genannten Druckschrift US 6,373,225 B1 ist ferner bekannt, das zur Überwachung des einzelnen Akkus verwendete Akku-Modul mit einem Schalter und einem vorgeschalteten Widerstand zu überbrücken.

Mit der Betätigung dieses Schalters wird ein Bypassstrom über diesen Schalter erzeugt, der dann dafür sorgt, dass dieser einzelne Akku nicht mit dem gleichen Ladestrom versorgt wird als vergleichsweise der in Serie geschaltete, andere Akku, dessen Überbrückungsschalter nicht betätigt ist.

Auf diese Weise kann individuell der Ladestrom an einzelnen, in Serie geschalteten Akkus, die in einer Akkubank zusammengeschaltet sind, geregelt werden.

Nachteil der bekannten Druckschrift ist, dass der Schalter lediglich eine Schaltfunktion zur Überbrückung des einzelnen Akkus hat und demzufolge keine individuelle Regelung des Bypassstromes über den einzelnen Akku möglich ist.

Weiterer Nachteil der genannten Schaltung ist, dass es keine adaptive Regelung gibt, weil die zur Auslösung des Schalters vorgegebenen Parameter fest eingestellt sind.

Die gleiche Kritik gilt auch für den Gegenstand der EP 1 220 414 A2, bei der, ebenfalls nur ein digitaler Bypass vorhanden ist, d. h. ein Schalter, der entweder nur ein- oder ausgeschaltet werden kann.

Es handelt sich im Übrigen um ein in sich geschlossenes System, welches nicht zur freien Anpassung an USV-Systeme geeignet ist.

Auch die DE 202 20 547 U1 beschreibt ein sogenanntes intelligentes, serielles Batterieladegerät und einen dazugehörenden Ladeblock. Auch bei dieser bekannten Druckschrift werden die einzelnen, zu überwachenden Akkus nur mit einem Schalter im Bypass überbrückt, wodurch die gleichen Nachteile entstehen, die vorstehend anhand der anderen Druckschriften erläutert wurden.

Mit der Druckschrift EP 0 814 556 A2 wird ein Verfahren zum Batterieladungsausgleich von einer Mehrzahl von Batterien offenbart, welche in Reihe angeordnet sind, wobei das Verfahren die Bestimmung der tatsächlichen oder geschätzten Anteil der Selbstentladung von den Batterien, und einzelne Parallelschaltungen über eine oder mehrere der Batterien, um Parallelschaltströme zu verursachen, die mindestens teilweise Unterschiede der besagten Anteile der Selbstentladung zwischen Batterien ausgleichen.

Diese Erfindung weist den Nachteil auf, dass die Spannung der einzelnen Akkus nicht auf eine vorbestimmte Sollkurve gebracht wird, bevor diese von Ihrem Ladezustand an einer Position der Sollkurve auf den endgültigen Ladezustand gebracht werden.

Mit der EP 1 341 286 A2 wird ein Verfahren zum Aufladen eines Batteriesatzes offenbart, wobei die Spannung des Batteriesatzes gemessen wird, die Änderung der berechneten Spannungsrate abgefragt wird und ein erster Wendepunkt ermittelt wird, welcher auf der Änderung der Spannungsrate basiert, solange ein Spannungsschritt nicht ermittelt ist; Ermittlung eines zweiten Wendepunktes, welcher auf der Änderung der Spannungsrate basiert, solange ein Spannungsschritt nicht ermittelt ist, und Reduzierung des Stromes, welcher zum Batteriesatz geschickt wird, wenn erster und zweiter Wendepunkt ermittelt sind.

Diese Erfindung weist ebenfalls den Nachteil auf, dass die Spannung der einzelnen Akkus nicht auf eine vorbestimmte Sollkurve gebracht wird, bevor diese von Ihrem Ladezustand an einer Position der Sollkurve auf den endgültigen Ladezustand gebracht werden.

Mit der Druckschrift US 5,578,914 wird ein Ladesystem zur Verringerung einer Bypass-Kapazität und zur Freigabe eines Ladebetriebes mit hohen Strömen offenbart. Eine Mehrzahl der in Reihe geschalteten einzelnen Batteriezellen sind an einer Ladeeinheit angeschlossen, wobei jede Zelle parallel an einen konstanten Stromkreis angeschlossen ist, welcher eine konstante Steuerspannung und eine gegenwärtige Sättigung ermittelt. Die konstante Steuerspannung ermittelt die Anschlussspannung, vergleicht die ermittelte Anschlussspannung mit der voreingestellten Spannung, und steuert die Anschlussspannung, um diese konstant zu halten, indem der Ladestrom überbrückt wird, in Abhängigkeit von der der Messabweichung. Die gegenwärtig ermittelte Sättigung schickt der Ladeeinheit ein Signal wenn der überbrückte Strom gesättigt ist, und die Aufladeeinheit verringert den Ladestrom in Erwiderung auf das Signal. Folglich kann die Kapazität des Überbrückungs-Stromes auf einem unteren Niveau eingestellt werden, wodurch eine hohe Aufladung möglich ist.

Diese Erfindung weist den Nachteil auf, dass die Spannung der einzelnen Akkus nicht auf eine vorbestimmte Sollkurve gebracht wird, bevor diese von Ihrem Ladezustand an einer Position der Sollkurve auf den endgültigen Ladezustand gebracht werden.

Mit der Druckschrift EP 0 498 679 A2 wird eine Überwachung einzelner Batteriezellen, welche einen Batteriesatz bilden, mittels Messung der Akkuspannung und die Zuführung der Energie in einen Stromregelkreislauf offenbart, wobei der Stromregelkreislauf jede überwachte Anschlussspannung ermittelt, welche ein Niveau erreicht, welches einen völlig überlasteten Zustand anzeigt. Ein variabler Gleichspannungskreislauf liefert einen Ladestrom, indem er die Abgabeleistung durch eine Hauptstromversorgung reguliert. Ermittelt der Stromregelkreis den Zustand einer völlig aufgeladenen Batteriezelle wird die Aufladung des Batteriesatzes über den Gleichspannungskreislauf gestoppt.

Diese Erfindung weist den gleichen wesentlichen Nachteil, wie die bereits vorbenannten Druckschriften auf.

Mit der WO 86/00418 wird ein Verfahren und Einrichtung zur Durchführung einer Überwachung des Ladezustandes von wiederaufladbaren Batterien, insbesondere Nickel-Cadmium-Akkumulatoren offenbart, wobei ein einem bestimmten Ladezustand entsprechender Referenzwert gespeichert, die Klemmenspannung, die Stromstärke und die Zeit während jedes Lade- und Entladezyklus der Batterie gemessen und unter Berücksichtigung der Stromrichtung in eine der zugeführten bzw. verbrauchten Energiemenge entsprechende Größe umgesetzt werden, aus der, ausgehend von dem Referenzwert, die Ladezustands-Istwerte berechnet werden.

Diese Druckschrift weist den Nachteil auf, dass die Spannung der einzelnen Akkus nicht auf eine vorbestimmte Sollkurve gebracht wird, bevor diese von Ihrem Ladezustand an einer Position der Sollkurve auf den endgültigen Ladezustand gebracht werden.

Mit der EP 1 220 414 A2 wird ein Ladeausgleichsleiter für eine Serie von in Reihe geschalteten Batterien offenbart, wobei dieser einen Parallelstrang für jede der Batterien einschließt. Der Ausgleichsleiter misst die Spannung von jeder der Batterien der Leitungen und schließt einen Schalter im Parallelstrang, welcher mit der höchsten Batteriespannung während einer vorbestimmten Zeit verbunden ist. Werden die Schalter von allen Parallelsträngen geöffnet wiederholen sich die Zyklen.

Auf diese Art wird die Ladung in den Batterien der Leitungen ausgeglichen, unabhängig davon, ob die Batterien in der Leitung in einem überlasteten Zustand ist.

Diese Erfindung weist den Nachteil auf, dass die Spannung der einzelnen Akkus nicht auf eine vorbestimmte Sollkurve gebracht wird, bevor diese von Ihrem Ladezustand an einer Position der Sollkurve auf den endgültigen Ladezustand gebracht werden.

Mit der Druckschrift US 4,191,918 wird elektrisches Ladegerät offenbart, welches ermittelt, wann die Batterie völlig aufgeladen ist, indem die Anstiegsrate der Batteriespannung überwacht wird; liegt die Anstiegsrate unterhalb eines vorbestimmten Wertes, wird die Aufladung beendet. Die Anstiegsrate der Spannung wird ermittelt, indem man ein unverarbeitetes Batteriespannungsignal mit einem Signal vergleicht, das dem Batteriespannungssignal mit einem exponentialen Zeitverzögerung folgt, welche eine Zeitkonstante von ungefähr 45 Minuten aufweist. Mit einer niedrigen Anstiegsrate der Spannung, wie, wenn sich die Batterie dem Überlastungs-Zustand nähert, neigt das verzögerte Signal dazu sich dem unverarbeiteten Signal anzugleichen und wenn der Unterschied unter 11 mV pro Zelle fällt, ist der Ladevorgang beendet.

Diese Erfindung weist den Nachteil auf, dass die Spannung der einzelnen Akkus nicht auf eine vorbestimmte Sollkurve gebracht wird, bevor diese von Ihrem Ladezustand an einer Position der Sollkurve auf den endgültigen Ladezustand gebracht werden.

Der Erfindung liegt deshalb die Aufgabe zugrunde, eine Vorrichtung der eingangs genannten Art so weiterzubilden, dass eine individuelle Ladeverteilung den einzelnen zu überwachenden Akkus zugeordnet werden kann, und zwar unabhängig von dem Zustand der externen Ladeeinheit.

Die Lösung der gestellten Aufgabe erfolgt durch die technische Lehre des Anspruches 1.

Wesentliches Merkmal der Erfindung ist, dass jedem einzelnen Akku ein Akku-Modul zugeordnet ist, welches eine regelbare Impedanz zur Überbrückung des einzelnen Akkus vorsieht, dass die regelbare Impedanz von einem Mikrokontroller angesteuert wird, der mindestens die am Akku anliegende Spannung, den Spannungsgradienten und die Temperatur erfasst und der im Übrigen über eine digitale Bus-Leitung mit einem Zentralmodul verbunden ist, welches die Mikrokontroller der anderen Akku-Module in gleicher Weise ansteuert.

Es wird mit der Erfindung ein interner Regelkreis beschrieben, der darin besteht, dass jedem einzelnen, individuellen Akku ein Akku-Modul zugeordnet ist, dass eine regelbare Impedanz aufweist, die von dem Akku-Modul geregelt wird und dass ferner dieses Akku-Modul über eine zentrale Bus-Leitung mit einem Zentralmodul in Verbindung steht, welches alle Akku-Module schaltungstechnisch verwaltet.

Damit werden die Daten, die im internen Regelkreis zwischen dem einzelnen Akku und dem zugeordneten Akku-Modul anfallen über das Akku-Modul an das äußere Zentralmodul übergeben und das Zentralmodul errechnet hieraus neue Parameter, die an das einzelnen Akku-Modul wieder zurückgegeben werden aber auch über die gemeinsame Bus-Leitung an alle anderen Akku-Module weitergegeben wird.

Auf diese Weise wird dafür gesorgt, dass alle Akku-Module - in Abhängigkeit von dem Zustand des dort verwalteten Akkus auf einen gleichen Zustand gebracht werden, so dass alle Akkus - unabhängig von ihrem Funktionszustand - individuell angesteuert und gemeinsam durch das Zentralmodul verwaltet werden.

Damit ergibt sich der Vorteil einer gleichmäßigen Ladeverteilung und der Vorteil eines autoadaptiven Systems, weil sich die erfindungsgemäße Akkubank an jeden beliebigen äußeren Laderegler adaptiv anpassen kann.

Wesentlich ist ferner, dass in jedem Akku über das zugeordnete Akku-Modul die dort anfallende Temperatur erfasst wird und dementsprechend das Akku-Modul auf die regelbare Impedanz einwirkt. Weiter ist wesentlich, dass eine Zustandsanalyse jedes einzelnen Akkus über das Akku-Modul erfolgt, welches seine Daten an das alle Akku-Module verwaltende Zentral-Modul weitergibt.

Schließlich ist eine Zustandssignalisierung vorgesehen, die den Zustand des Zentralmoduls nach außen hin erkennbar macht. Eine solche Signalisierung kann entweder optisch, akustisch oder über entsprechende Kontakt-Schaltungen erfolgen.

Mit der gegebenen technischen Lehre ergibt sich der Vorteil, dass im Bereich der USV-Einrichtungen stets die optimale Leistung einer Akkubank zur Verfügung gestellt wird, unabhängig davon, welche physikalischen Eigenschaften diese USV hat.

Die USV wird als externe Ladeeinheit und als Last definiert, deren Parameter ebenfalls von dem Zentral-Modul erfasst werden und über eine entsprechende intelligente Auswertung den einzelnen Akku-Modulen mitgeteilt wird.

Mit der gegebenen technischen Lehre ergibt sich der Vorteil, dass eine individuelle Zustandsanalyse jedes einzelnen Akkus möglich ist. Dies führt dazu, dass bei degenerierten Akkus der entsprechende Zustand vom Akku-Modul erfasst wird, welches diesen gestörten Zustand wiederum dem Zentralmodul mitteilt. Das Zentralmodul steuert dann das Akku-Modul mit dem degenerierten Akku dergestalt an, dass auch dieser degenerierte Akku auf seine volle, maximal mögliche Kapazität gebracht wird, um so möglichst im Gleichtakt mit allen anderen - nicht degenerierten - Akkus arbeiten zu können. Auf diese Weise wird mit dem erfindungsgemäßen Prinzip eine optimale Leistungsausbeute jeden Akkus erreicht, auch wenn es sich um degenerierte oder halb-degenerierte Akkus handelt, die in der Serienschaltung der Akkubank vorhanden sind.

Damit wird auch die Lebensdauer der einzelnen Akkus drastisch erhöht, weil kein einziger Akku - sei er degeneriert oder nicht - während der Lade- und Entladephase geschädigt wird und dadurch die Lebensdauer der einzelnen Akkumulatoren sowie auch der gesamten Akkubank wesentlich heraufgesetzt wird.

Die Spannungsregelung erfolgt damit zum Einen direkt am Akku über den vorher beschriebenen internen Regelkreis und zum Anderen permanent nachführend über den vorher beschriebenen externen Regelkreis zwischen dem Akku-Modul und dem Zentralmodul. Dadurch lässt sich dieser Aufbau an unbekannte Ladesysteme adaptieren.

Die Aufgaben des Zentralmoduls sind folgende:
- autoadaptive Anpassung der Akkubank an das übergeordnete System (USV)
- adaptive Ladeverteilungsregelung
- Lade-, Entlade- und Erholungsphasenanalyse
- Gradientenvergleich
- Kapazitäts- und Innenwiderstands-Abschätzung
- Temperaturüberwachung
- Zustandsanzeige des Systems inklusive Alarmdatenausgabe
- Parameterübergabe an die Batteriemodule

Die Aufgaben des einzelnen Akku-Moduls sind folgende:
- Erfassung der Akkuspannungen und Gradienten
- Erfassung der Temperatur
- entsprechende Signalkonditionierungen
- analog Bypass-Regelung
- Datenübergabe

Die Eigenschaften des Gesamtsystems sind:
- Erhöhung der Akku-Lebensdauer und somit der gesamten Akkubank
- Sicherstellung der maximal möglichen System-Kapazität zu jeder Zeit (Steigerung um bis zu 18,2 %)
- Warnungen bei schwachen bzw. defekten Systemen, wichtig gerade in sicherheitsrelevanten Bereichen wie USV-Einrichtungen
- Alarm bei Grenzdatenüberschreitungen (z. B. zu hohe Akkuspannung)

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert ein Schaltbild einer Akkubank;
- Figur 2:: schematisiert eine andere Ausführungsform mit Parallelschaltung von mehreren Akkubänken;
- Figur 3:: schematisiert die Einwirkung von internen und externen Regelkreisen;
- Figur 4:: die Darstellung der Ladespannung über die Zeit an verschiedenen zu überwachenden Akkus.

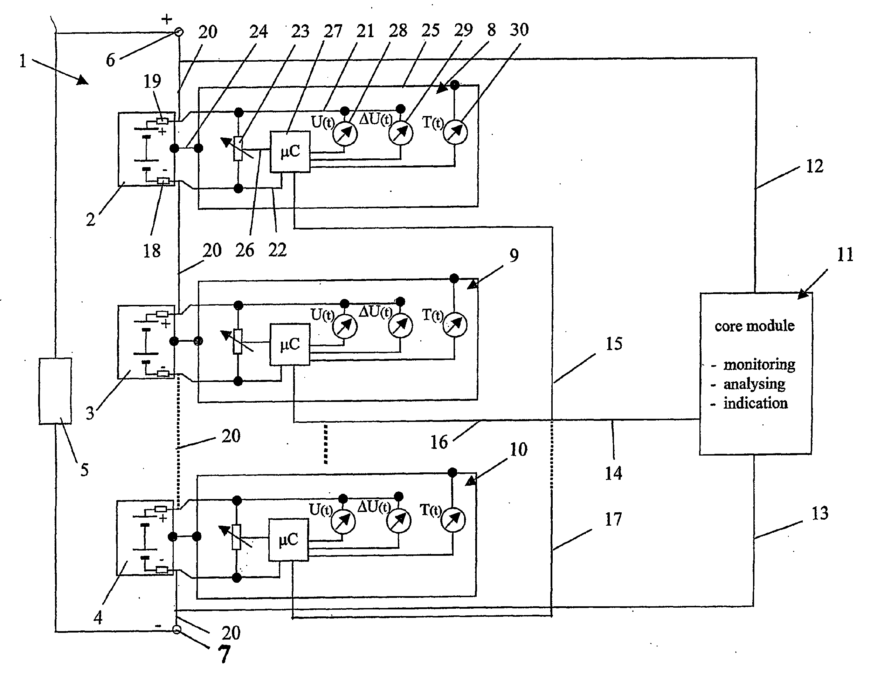

In Figur 1 ist insgesamt eine Akkubank 1 dargestellt, die aus einer Serienschaltung von mehreren einzelnen Akkus 2, 3, 4 besteht, wobei jeder Akku 2, 3, 4 aus einer Vielzahl von Zellen besteht.

In einer bevorzugten Ausgestaltung können es beispielsweise sechs Zellen pro Akku 2, 3, 4 sein.

Die Akkus 2, 3, 4 sind in Serie geschaltet und sind somit über eine serielle Verbindungsleitung 20 miteinander verbunden. Die Verbindungsleitung 20 bildet an der einen Seite einen Anschluss 6, der z. B. als Plus-Pol ausgebildet ist und auf der anderen, gegenüberliegenden Seite einen als Minus-Pol ausgebildeten Anschluss 7.

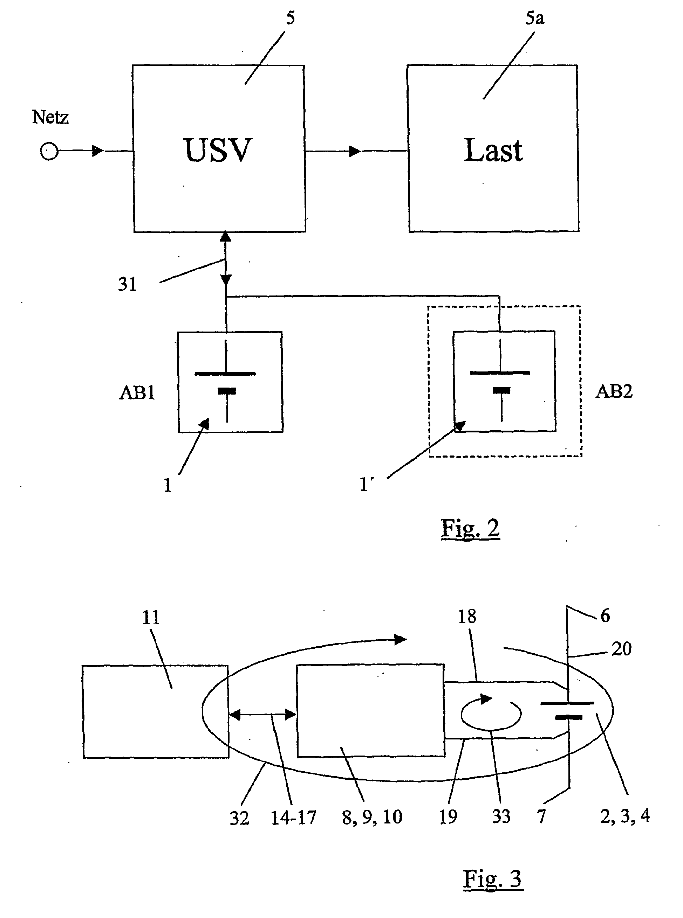

An den beiden Anschlüssen 6, 7 liegt eine externe Ladeeinheit und Last 5, die auch in Figur 2 dargestellt ist. Dort ist sie als Ladeeinheit 5 und Last 5a aufgegliedert.

Wichtig ist nun, dass zur Ladeverteilung und zur Überwachung des Zustandes der einzelnen Akkus 2, 3, 4 jedem Akku ein separates Akku-Modul 8, 9, 10 zugeordnet ist. Weil die Akku-Module 8-10 gleich ausgebildet sind, genügt es, für die weitere Beschreibung die Funktion eines einzelnen Akku-Moduls 8 zu beschreiben.

Alle Akku-Module 8-10 sind über eine zentrale Bus-Leitung 14, 15, 16, 17 mit einem Zentralmodul 11 verbunden, welches - entsprechend dem allgemeinen Beschreibungsteil - sozusagen die Verwaltung der einzelnen Akku-Module 8-10 übernimmt.

Das Zentralmodul 11 ist über die Leitungen 12, 13 mit den Anschlüssen 6, 7 verbunden. Damit werden Spannungsschwankungen und andere Zustandsänderungen an der Ladeeinheit und Last 5 von dem Zentralmodul 11 erfasst und verarbeitet.

Nachfolgend wird die Funktion eines Akku-Moduls 8 näher beschrieben.

An den Anschlüssen 18, 19 des Akkus 2 schließen hierbei die Leitungen 21, 22 des Akku-Moduls 8 an. Wichtig ist nun, dass in Parallelschaltung zu den Anschlüssen 18, 19 eine regelbare Impedanz 23 eingeschaltet ist, welche diese beiden Anschlüsse 18, 19 überbrückt.

Die Steuerleitung 26 führt in einen Mikrokontroller 27 hinein, der gleichzeitig an den Leitungen 21, 22 angeschlossen ist.

Damit kann der Mikrokontroller 27 den Strom durch die regelbare Impedanz 23 und somit auch den Spannungsabfall an den Anschlüssen 18, 19 des Akkus 2 regeln.

Somit bestimmt die regelbare Impedanz 23 den Ladestrom des jeweiligen Akkus 2.

Wichtig ist, dass das Akku-Modul 8 auch noch über eine mechanische und eine thermische Kopplung 24 mit dem zu überwachenden Akku 2 verbunden ist, um eventuelle Temperaturerhöhungen zu erfassen und diese dem Mikrokontroller 27 mitzuteilen. Dies wird durch die Temperaturerfassung 30 in Figur 1 symbolisch dargestellt.

Ferner erfasst der Mikrokontroller 27 die an den Anschlüssen 18, 19 abfallende Spannung mit der Spannungserfassung 28 und auch einen Spannungsgradienten über die Gradientenerfassung 29.

Der Spannungsgradient ist der Spannungsabfall über eine gewisse Messzeit hinweg gemessen.

Die Platine 25 des Akku-Moduls 8 bildet somit die vorher erwähnte thermische und mechanische Kopplung 24 mit dem zu überwachenden Akku 2.

Die jeweilige Zustandssignale an den Erfassungsstellen 28-30 werden vom Mikrokontroller 27 in entsprechende, digitale Signale umgewandelt und auf jeweils eine digitale Leitung 15, 16, 17 ausgegeben. Alle diese Leitungen stehen mit der Bus-Leitung 14 in Verbindung, die den Eingang für das Zentral-Modul 11 bildet. Somit werden alle Zustandserfassungen 28-30 dem Zentralmodul 11 zugeführt und von diesem verarbeitet.

Nach der Verarbeitung im Zentralmodul 11 steuert dieses wiederum über das zentrale Bus-System 14-17 alle Akku-Module 8-10 an, um so eine individuelle Zuordnung des Ladestroms den einzelnen Akkus 2-4 zu ermöglichen.

Dies erfolgt in Abhängigkeit vom Degenerationszustand des Akkus, von dessen Temperatur und von anderen Parametern.

Jede regelbare Impedanz 23 ordnet somit jedem Akku 2-4 einen individuellen Ladestrom zu, der zu einem Spannungsabfall an den Anschlüssen 18, 19 führt, die wiederum von dem Zentralmodul 11 erfasst wird.

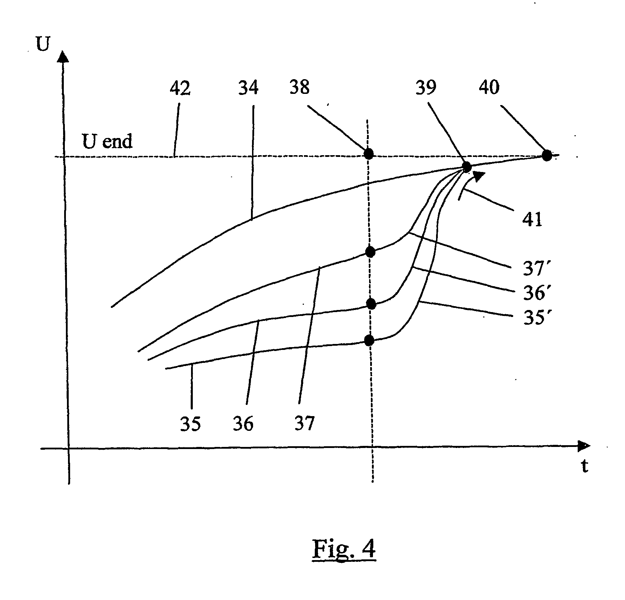

Die Verarbeitung dieser - über die Zeit gesehenen - Kurvenscharen erfolgt anhand der Erläuterung der Figur 4.

Die Figur 2 zeigt, dass eine reine Parallelschaltung der Akkus 2, 3, 4 möglich ist, die dann in einer Art, wie in Figur 2 dargestellt ist, parallelgeschaltet sind.

Gleichzeitig zeigt die Figur 2 auch schematisch, dass man eine gesamte Akku-Bank 1, wie es in Figur 2 dargestellt ist, mit einer zweiten Akku-Bank 1' ebenfalls parallel schalten kann.

Diese Parallelschaltung wird über die Leitung 31 mit der externen Ladeeinheit 5 und einer daran angekoppelten Last 5a verschaltet.

Die Figur 3 zeigt die Funktion des internen und des externen Regelkreises.

Es ist schematisiert dargestellt, dass in jedem Akku-Modul 8-10 ein interner Regelkreis 33 vorhanden ist, der über die Anschlüsse 18, 19 den Zustand jedes einzelnen Akkus 2-4 regelt. Die Regelung erfolgt hierbei unter Einwirkung des Mikrokontrollers in dem jeweiligen Akku-Modul 8-10.

Die Akku-Module 8-10 sind jedoch über die Bus-Leitung 14-17 in Verbindung mit dem Zentralmodul 11, welches einen externen Regelkreis 32 aufweist und somit alle Akku-Module 8-10 entsprechend regelt.

Die Regelung jedes einzelnen Akkus 2-4 ist anhand von Kurvenscharen in der Figur 4 näher dargestellt.

Auf der Ordinate ist die Ladespannung dargestellt, während auf der Abzsisse die Zeit dargestellt ist.

Zunächst wird eine Sollkurve 34 der Ladespannung der gesamten Akkubank 1 definiert. Im Idealzustand sollen alle Akkus 2-4 auf diese Sollkurve 34 eingeregelt werden. Nur wenn alle Akkus - entsprechend ihrem degenerativen Zustand - auf diese gemeinsame Sollkurve 34 eingeregelt werden, haben sie die längstmögliche Lebensdauer und es wird die maximale Leistungsfähigkeit der Akkubank 1 gewährleistet.

Hierzu ist schematisiert dargestellt, dass in einem ersten Zustand alle Istkurven 35, 36, 37 der einzelnen Akkus 2-4 weit unterhalb der idealen Sollkurve 34 liegen. Dies kann an dem schlechten Zustand der einzelnen Akkus 2-4 liegen, jedoch auch möglicherweise an der Stellung der regelbaren Impedanz 23.

Bei einer bestimmten Position 38 erfolgt nun die Regelung in der Weise, dass jedes einzelne Akku-Modul 8-10 die jeweils zugeordnete regelbare Impedanz 23 dergestalt ansteuert, dass sich nun die Istkurve 35, 36, 37 asymptotisch einer Idealposition 39 nähern, die auf der Sollkurve 34 liegt.

Auf diese Weise wird die Leistungsfähigkeit aller Akkus 2-4 der Sollkurve 34 angenähert, so dass alle sich auf einem gleichen Spannungsniveau befinden.

Die Regelung erfolgt so lange, bis der gemeinsame Schnittpunkt aller geregelten Kurven 35', 36', 37' sich von der Position 39 in eine höher gelegene Position 40 verschiebt, die idealerweise den Schnittpunkt mit einer Geraden 42 bildet, welche die Endspannung darstellt.

Damit ist der ideale Zustand erreicht, dass nämlich die Regelung von der Position 39 in Pfeilrichtung 41 auf die Position 40 einregelt und alle Spannungen an allen Akkus auf die gemeinsame Endspannung der gesamten Akkubank 1 einregelt.

Weil alle regelbaren Impedanzen 23 in Abhängigkeit von der Regelung der einzelnen Akkumodule 8-10 unter Verwaltung des Zentralmoduls 11 individuell einstellbar sind, wird hiermit erstmals eine autoadaptive Anpassung einer Akkubank an ein übergeordnetes System (z.B. USV) dargestellt.

Es erfolgt also eine adaptive Ladeverteilungsregelung in der Weise, dass auf den Erhaltungszustand, den Degenerationszustand und andere Parameter jedes einzelnen Akkus Rücksicht genommen wird und alle soweit angesteuert werden, dass sie in eine gemeinsame Position einer Endspannung eingeregelt werden.

Gleichzeitig wird eine Akku-Analyse jedes einzelnen Akkus durchgeführt, in der Weise, dass während des Entladens eine Profilmessung und eine Gradientenmessung stattfindet. Mit der Profilmessung wird die Spannung über die Zeit während des Entladevorganges an jedem einzelnen Akku erfasst und zur Bewertung des Gütezustandes des Akkus herangezogen. Zusätzlich muss diese Aussage der Profilmessung (Entladekurve des einzelnen Akkus) mit dem Spannungsgradienten an jedem einzelnen Akku übereinstimmen.

Wenn die Akkubank 1 die Endspannung in der Geraden 42 erreicht hat, fließt kein Strom mehr von der Ladeeinheit 5 in die Akkubank 1 hinein, weil ein gleiches Spannungsniveau vorliegt.

Bei Wegfall der Ladeeinheit, z. B. durch einen Spannungsausfall, liegt nur noch die Last an den Anschlüssen 6, 7 an. Es erfolgt dann eine gesteuerte Entladung der gesamten Akkubank 1. Die Steuerung des Entladestromes wird von der USV übernommen.

Im Verlaufe der Entladung ergeben sich spezifische Spannungsabfälle an den Anschlüssen 18, 19 jeden einzelnen Akkus 2-4. Alle Spannungsverläufe werden von den entsprechenden Akku-Modulen 8-10 erfasst und an das Zentralmodul 11 weitergemeldet. Aus den entsprechenden Entladespannungen über die Zeit gesehen (Entladeprofile) können Rückschlüsse über die Güte des jeweiligen zu überwachenden Akkus 2-4 tätig werden. Hierbei werden - wie oben ausgeführt - nicht nur die Entladungsprofile über die Zeit hinweggesehen erfasst, sondern auch die Spannungsgradientenprofile.

Entsprechend diesen beiden Parametern wird der Gütezustand des jeweiligen Akkus bewertet und dem Zentralmodul 11 mitgeteilt. Das Zentralmodul signalisiert dann gegebenenfalls, ob einzelne Akkus ausgetauscht werden müssen oder nicht.

### Zeichnungslegende

- 1: Akkubank
- 2: Akku
- 3: Akku
- 4: Akku
- 5: Ladeeinheit und Last
- 6: Anschluss
- 7: Anschluss
- 8: Akku-Modul
- 9: Akku-Modul
- 10: Akku-Modul
- 11: Zentral-Modul
- 12: Leitung
- 13: Leitung
- 14: Bus-Leitung
- 15: Leitung
- 16: Leitung
- 17: Leitung
- 18: Anschluss
- 19: Anschluss
- 20: Verbindungsleitung
- 21: Leitung
- 22: Leitung
- 23: regelbare Impedanz
- 24: thermische und mechanische Kopplung
- 25: Platine
- 26: Steuerleitung
- 27: Mikrokontroller
- 28: Spannungserfassung
- 29: Gradientenerfassung
- 30: Temperaturerfassung
- 31: Leitung
- 32: externer Regelkreis
- 33: interner Regelkreis
- 34: Sollkurve
- 35: Ist-Kurve (Akku 2)
- 36: Ist-Kurve (Akku 3)
- 37: Ist-Kurve (Akku 4)
- 38: Position
- 39: Position
- 40: Position
- 41: Pfeilrichtung
- 42: Gerade

## Patentansprüche

1. Ladevorrichtung (5) zur Ladeverteilung und Überwachung von mehreren Akkumulatoren (2, 3, 4), wobei die einzelnen Akkumulatoren (2, 3, 4) in einer Serienschaltung angeordnet sind und jedem einzelnen Akkumulator (2, 3, 4) ein Akku-Modul (8, 9, 10) in einer parallelen Schaltungsanordnung zugeordnet ist und jedes einzelne Akku-Modul (8, 9, 10) zur Überwachung der Akkumulatoren (2, 3, 4) mit einem Schalter und einem vorgeschalteten Widerstand überbrückt ist, welcher bei Betätigung einen Bypassstrom erzeugt und eine Unterbrechung der Ladestromversorgung zu dem entsprechenden Akkumulator (2, 3, 4) aufweist, wobei die einzelnen, in Serie geschalteten Akkumulatoren (2, 3, 4) eine Regelung mittels Zusammenschaltung in einer Akkubank aufweisen, und jedes Akku-Modul (8, 9, 10) von einem Mikrokontroller (27) angesteuert wird, welcher mindestens die am Akku (2, 3, 4) anliegende Spannung (28) und die Temperatur (30) erfasst und über eine digitale Bus-Leitung (14) mit einem Zentralmodul (11) verbunden ist, welches die Mikrokontroller (27) der anderen Akku-Module (8, 9, 10) in gleicher Weise ansteuert, **dadurch gekennzeichnet, dass**
- der Bypassstrom mittels einer regelbaren Impedanz (23) verändert wird,
- und der Mikrokontroller (27) zusätzlich einen Spannungsgradienten (29) erfasst,
- und die regelbaren Impedanzen (23) so angesteuert werden, dass die Spannungs-Zeitverläufe (35', 36', 37') der einzelnen Akkus (2, 3, 4) asymptotisch auf ein gleiches unteres Spannungsniveau (39) auf einer Spannungs-Zeitsollkurve (34) zulaufen,
- und dass anschließend die Regelung der Impedanz so lange erfolgt, bis der gemeinsame Schnittpunkt aller geregelten Kurven (35', 36', 37') sich von dem gemeinsamen unteren Spannungsniveau (39) auf ein gemeinsames oberes Spannungsniveau (40) auf der Sollkurve (34) verschiebt,

2. Ladevorrichtung nach den Ansprüchen 1 und 2, **dadurch gekennzeichnet, dass** das dem Akkumulator (2, 3, 4) zugeordnete Akku-Modul (8, 9, 10) eine regelbare Impedanz regelt.

3. Ladevorrichtung nach den Ansprüchen 1 bis 2, **dadurch gekennzeichnet, dass** das Akku-Modul (8, 9, 10) über eine digitale Bus-Leitung (14, 15, 16, 17) eine Verbindung mit einem Zentral-Modul (11) aufweist.

4. Ladevorrichtung nach den Ansprüchen 1 bis 3, **dadurch gekennzeichnet, dass** das Zentral-Modul (11) über die Bus-Leitung (14) eine schaltungstechnische Verwaltung aller Akku-Module (8, 9, 10) aufweist.

5. Ladevorrichtung nach den Ansprüchen 1 bis 4, **dadurch gekennzeichnet, dass** das Akku-Modul (8, 9, 10) die zwischen dem einzelnen Akkumulator (2, 3, 4) und dem zugeordneten Akku-Modul (8, 9, 10) anfallenden Daten an das Zentral-Modul (11) übergibt.

6. Ladevorrichtung nach den Ansprüchen 1 bis 5, **dadurch gekennzeichnet, dass** das Zentral-Modul (11) aus den übermittelten Daten neue Parameter errechnet, welche über die Bus-Leitung (14) an alle Akku-Module (8, 9, 10) gesendet werden.

7. Ladevorrichtung nach den Ansprüchen 1 bis 6, **dadurch gekennzeichnet, dass** das Senden der errechneten Parameter des Zentral-Moduls (11) über die Bus-Leitung (14) an die Akku-Module (8, 9, 10) in Abhängigkeit von dem Zustand des dort verwalteten Akkumulators (2, 3, 4) erfolgt, um einen gleichen Zustand der Akku-Module (8, 9, 10) herzustellen.

8. Ladevorrichtung nach den Ansprüchen 1 bis 7, **dadurch gekennzeichnet, dass** das Zentral-Modul (11) alle Akkumodule (8, 9, 10) mittels des Mikrokontrollers (27) individuell ansteuert und verwaltet.

9. Ladevorrichtung nach den Ansprüchen 1 bis 8, **dadurch gekennzeichnet, dass** diese eine gleichmäßige Ladeverteilung und ein autoadaptives System ausbildet, welche sich an jeden beliebigen äußeren Laderegler adaptiv anpasst.

10. Ladevorrichtung nach den Ansprüchen 1 bis 9, **dadurch gekennzeichnet, dass** das jedem Akkumulator (2, 3, 4) zugeordnete Akku-Modul (8, 9, 10) die im Akkumulator (2, 3, 4) herrschendeTemperatur erfasst und das Akku-Modul (8, 9, 10) auf die regelbare Impedanz (23) einwirkt.

11. Ladevorrichtung nach den Ansprüchen 1 bis 10, **dadurch gekennzeichnet, dass** das Akku-Modul (8, 9, 10) eine Zustandsanalyse jedes einzelnen Akkumulators (2, 3, 4) aufweist, welche an das Zentral-Modul (11) weitergeleitet ist.

12. Ladevorrichtung nach den Ansprüchen 1 bis 11, **dadurch gekennzeichnet, dass** das Zentral-Modul (11) eine nach außen hin erkennbare Zustandssignalisierung aufweist, welche eine optische und/oder akustische Signalisierung und/oder über entsprechende Kontakt-Schaltung erfolgte Signalisierung aufweist.

13. Ladevorrichtung nach den Ansprüchen 1 bis 12, **dadurch gekennzeichnet, dass** die Akkubank im Bereich der USV-Einrichtung eine optimale Leistung, innerhalb ihrer bestimmten, gegebenen physikalischen Eigenschaften aufweist.

14. Ladevorrichtung nach den Ansprüchen 1 bis 13, **dadurch gekennzeichnet, dass** das Zentral-Modul (11) die Parameter der USV-Einrichtung erfasst und mittels einer intelligenten Auswertung den einzelnen Akku-Modulen (8, 9, 10) mitteilt:

15. Ladevorrichtung nach den Ansprüchen 1 bis 14, **dadurch gekennzeichnet, dass** die Akkumulatoren mittels einer Steuerung über die Akku-Module (8, 9, 10) eine mögliche maximale Kapazität und optimale Leistungsausbeute nach dem Ladevorgang erreichen.

16. Ladevorrichtung nach den Ansprüchen 1 bis 15, **dadurch gekennzeichnet, dass** die Spannungsregelung mittels internem Regelkreis (33) direkt am Akkumulator (2, 3, 4) erfolgt und eine permanente Spannungsnachführung mittels einem externen Regelkreis (32) zwischen Akku-Modul (8, 9, 10) und Zentral-Modul (11) erfolgt.

17. Ladevorrichtung nach den Ansprüchen 1 bis 16, **dadurch gekennzeichnet, dass** das Zentralmodul (11) eine
• autoadaptive Anpassung der Akkubank an das übergeordnete System,
• Ladeverteilungsregelung
• Lade-, Entlade- und Erholungsphasenanalyse
• Kapazitäts- und Innenwiderstands-Abschätzung
• Temperaturüberwachung
• Zustandsanzeige des Systems inklusive Alarmdatenausgabe
• Parameterübergabe an die Akku-Module
aufweist.

18. Ladevorrichtung nach den Ansprüchen 1 bis 9, **dadurch gekennzeichnet, dass** die Akku-Module (8, 9, 10) eine
• Erfassung der Akkuspannungen und Gradienten
• Erfassung der Temperatur
• Signalkonditionierung
• analoge Bypass-Regelung
• Datenübergabe
aufweisen.

## Claims

1. Charging device (5) for charge distribution and monitoring of several storage batteries (2, 3, 4), wherein the individual storage batteries (2, 3, 4) are arranged in series connection and a storage battery module (8, 9, 10) in a parallel circuit arrangement is assigned to each individual storage battery (2, 3, 4) and each individual storage battery module (8, 9, 10) to monitor the storage batteries (2, 3, 4) is bridged by a switch and a series resistance, which produces a bypass current on actuation and has interruption of the charging-current supply to the corresponding storage batteries (2, 3, 4), wherein the individual, series-connected storage batteries (2, 3, 4) have regulation by means of interconnection in a storage-battery bank, and each storage battery module (8, 9, 10) is controlled by a microcontroller (27), which records at least the voltage (28) existing at the storage battery (2, 3, 4) and the temperature (30) and is connected to a central module (11) via a digital bus line (14), which central module (11) controls the microcontroller (27) of the other storage battery modules (8, 9, 10) in the same manner, **characterised in that**
- the bypass current is changed by means of a regulatable impedance (23),
- and the microcontroller (27) additionally records a voltage gradient (29),
- and the regulatable impedances (23) are controlled so that the voltage-time paths (35', 36', 37') of the individual storage batteries (2, 3, 4) run asymptotically to the same lower voltage level (39) on a voltage-time theoretical curve (34),
- and **in that** then regulation of the impedance takes place until the common point of intersection of all regulated curves (35', 36', 37') is shifted from the common lower voltage level (39) to a common upper voltage level (40) on the theoretical curve (34).

2. Charging device according to claims 1 and 2, **characterised in that** the storage battery module (8, 9, 10) assigned to the storage battery (2, 3, 4) regulates a regulatable impedance.

3. Charging device according to claims 1 to 2, **characterised in that** the storage battery module (8, 9, 10) has a connection with a central module (11) via a digital bus line (14, 15, 16, 17).

4. Charging device according to claims 1 to 3, **characterised in that** the central module (11) has management in terms of circuitry of all storage battery modules (8, 9, 10) via the bus line (14).

5. Charging device according to claims 1 to 4, **characterised in that** the storage battery module (8, 9, 10) transfers the data being obtained between the individual storage batteries (2, 3, 4) and the assigned storage battery module (8, 9, 10) to the central module (11).

6. Charging device according to claims 1 to 5, **characterised in that** the central module (11) calculates from the transmitted data, new parameters which are transmitted to all storage battery modules (8, 9, 10) via the bus line (14).

7. Charging device according to claims 1 to 6, **characterised in that** the transmission of the calculated parameters of the central module (11) takes place via the bus line (14) to the storage battery modules (8, 9, 10) as a function of the status of the storage battery (2, 3, 4) managed there in order to produce a similar status of the storage battery modules (8, 9, 10).

8. Charging device according to claims 1 to 7, **characterised in that** the central module (11) controls and manages all storage battery modules (8, 9, 10) individually by means of the microcontroller (27).

9. Charging device according to claims 1 to 8, **characterised in that** this forms a uniform charge distribution and an autoadaptive system, which is matched adaptively to any external charge regulator.

10. Charging device according to claims 1 to 9, **characterised in that** the storage battery module (8, 9, 10) assigned to each storage battery (2, 3, 4) records the temperature prevailing in the storage battery (2, 3, 4) and the storage battery module (8, 9, 10) acts on the regulatable impedance (23).

11. Charging device according to claims 1 to 10, **characterised in that** the storage battery module (8, 9, 10) has status analysis of each individual storage battery (2, 3, 4), which is conveyed to the central module (11).

12. Charging device according to claims 1 to 11, **characterised in that** the central module (11) has externally recognisable status signalling which has optical and/or acoustic signalling and/or signalling which has taken place via corresponding contact circuitry.

13. Charging device according to claims 1 to 12, **characterised in that** the storage battery bank has in the region of the USV device, an optimum power within its intended, given physical properties.

14. Charging device according to claims 1 to 13, **characterised in that** the central module (11) records the parameters of the USV device and communicates them by means of intelligent evaluation to the individual storage battery modules (8, 9, 10).

15. Charging device according to claims 1 to 14, **characterised in that** the storage batteries by means of control via the storage battery modules (8, 9, 10) reach a possible maximum capacity and optimum power yield after the charging process.

16. Charging device according to claims 1 to 15, **characterised in that** the voltage regulation is effected directly at the storage battery (2, 3, 4) by means of internal control circuit (33) and permanent voltage tracking is effected by means of an external control circuit (32) between storage battery module (8, 9, 10) and central module (11).

17. Charging device according to claims 1 to 16, **characterised in that** the central module (11) has
• autoadaptive matching of the storage battery bank to the higher system,
• regulation of charge distribution
• charging-phase, discharging-phase and recovery-phase analysis
• estimation of capacity and internal resistance
• temperature monitoring
• status display of the system including alarm data output
• parameter transfer to the storage battery modules.

18. Charging device accordingly to claims 1 to 9, **characterized in that** the storage battery module (8, 9, 10) has
• recording of the storage battery voltages and gradients,
• recording of temperature
• signal conditioning
• analog bypass-regulator
• data transfer.

## Revendications

1. Dispositif de charge (5) pour la répartition de charge et la surveillance de plusieurs accumulateurs (2, 3, 4), étant précisé que les accumulateurs individuels (2, 3, 4) sont disposés dans un montage en série, qu'à chaque accumulateur individuel (2, 3, 4) est associé un module d'accumulateur (8, 9, 10) dans un montage parallèle et que chaque module d'accumulateur individuel (8, 9, 10), pour surveiller les accumulateurs (2, 3, 4), est court-circuité à l'aide d'un commutateur et d'une résistance montée en aval qui, lorsqu'elle est actionnée, produit un courant de dérivation et présente une interruption de l'alimentation de courant de charge de l'accumulateur (2, 3, 4) correspondant, et étant précisé que les accumulateurs individuels (2, 3, 4) montés en série présentent une régulation en étant réunis dans un ensemble d'accumulateurs et que chaque module d'accumulateur (8, 9, 10) est déclenché par un microcontrôleur (27) qui détecte au moins la tension (28) appliquée à l'accumulateur (2, 3, 4) et la température (30) et qui est relié par une ligne de bus numérique (14) à un module central (11), lequel commande de la même manière les microcontrôleurs (27) des autres modules d'accumulateurs (8, 9, 10),
**caractérisé en ce que**
- le courant de dérivation est modifié à l'aide d'une impédance réglable (23),
- et le microcontrôleur (27) détecte en supplément un gradient de tension (29),
- et les impédances réglables (23) sont commandées de telle sorte que les courbes tension-temps (35', 36', 37') des accumulateurs individuels (2, 3, 4) sont asymptotiques par rapport à un même niveau de tension inférieur (39) sur une courbe théorique tension-temps (34),
- et **en ce qu'**ensuite, la régulation de l'impédance a lieu jusqu'à ce que l'intersection commune de toutes les courbes réglées (35', 36', 37') se déplace du niveau de tension inférieur commun (39) jusqu'à un niveau de tension supérieur commun (40) sur la courbe théorique (34).

2. Dispositif de charge selon la revendication 1, **caractérisé en ce que** le module d'accumulateur (8, 9, 10) associé à l'accumulateur (2, 3, 4) règle une impédance réglable.

3. Dispositif de charge selon les revendications 1 à 2, **caractérisé en ce que** le module d'accumulateur (8, 9, 10) présente par l'intermédiaire d'une ligne de bus numérique (14, 15, 16, 17) une liaison avec un module central (11).

4. Dispositif de charge selon les revendications 1 à 3, **caractérisé en ce que** le module central (11) comporte par l'intermédiaire de la ligne de bus (14) une gestion de commutation de tous les modules d'accumulateurs (8, 9, 10).

5. Dispositif de charge selon les revendications 1 à 4, **caractérisé en ce que** le module d'accumulateur (8, 9, 10) transmet au module central (11) les données présentes entre l'accumulateur individuel (2, 3, 4) et le module 'd'accumulateur associé (8, 9, 10).

6. Dispositif de charge selon les revendications 1 à 5, **caractérisé en ce que** le module central (11) calcule à partir des données transmises de nouveaux paramètres qui sont envoyés par l'intermédiaire de la ligne de bus (14) à tous les modules d'accumulateurs (8, 9, 10).

7. Dispositif de charge selon les revendications 1 à 6, **caractérisé en ce que** l'envoi des paramètres calculés du module central (11) aux modules d'accumulateurs (8, 9, 10) par l'intermédiaire de la ligne de bus (14) se fait en fonction de l'état de l'accumulateur (2, 3, 4) géré à cet endroit, afin d'établir un état identique des modules d'accumulateurs (8, 9, 10).

8. Dispositif de charge selon les revendications 1 à 7, **caractérisé en ce que** le module central (11) commande et gère individuellement tous les modules d'accumulateurs (8, 9, 10) à l'aide du microcontrôleur (27).

9. Dispositif de charge selon les revendications 1 à 8, **caractérisé en ce qu'**il forme une répartition de charge uniforme et un système autoadaptatif qui s'adapte à n'importe quel régulateur de charge extérieur.

10. Dispositif de charge selon les revendications 1 à 9, **caractérisé en ce que** le module d'accumulateur (8, 9, 10) associé à chaque accumulateur (2, 3, 4) détecte la température qui règne dans l'accumulateur (2, 3, 4), et le module d'accumulateur (8, 9, 10) agit sur l'impédance réglable (23).

11. Dispositif de charge selon les revendications 1 à 10, **caractérisé en ce que** le module d'accumulateur (8, 9, 10) comporte une analyse d'état de chaque accumulateur individuel (2, 3, 4) qui est transmise au module central (11).

12. Dispositif de charge selon les revendications 1 à 11, **caractérisé en ce que** le module central (11) comporte une signalisation d'état reconnaissable à l'extérieur, qui comporte une signalisation optique et/ou acoustique et/ou une signalisation qui se fait grâce à une commutation de contact correspondante.

13. Dispositif de charge selon les revendications 1 à 12, **caractérisé en ce que** l'ensemble d'accumulateurs présente dans la zone du dispositif d'alimentation ininterrompue en courant une puissance optimale à l'aide de ses propriétés physiques définies.

14. Dispositif de charge selon les revendications 1 à 13, **caractérisé en ce que** le module central (11) détecte les paramètres du dispositif d'alimentation ininterrompue en courant et les transmet à l'aide d'une évaluation intelligente aux modules d'accumulateurs individuels (8, 9, 10).

15. Dispositif de charge selon les revendications 1 à 14, **caractérisé en ce que** les accumulateurs atteignent, grâce à une commande par l'intermédiaire des modules d'accumulateurs (8, 9, 10), une capacité possible maximale et un rendement optimal après l'opération de charge.

16. Dispositif de charge selon les revendications 1 à 15, **caractérisé en ce que** la régulation de tension se fait directement sur l'accumulateur (2, 3, 4) à l'aide d'un circuit de régulation interne (33), et une actualisation permanente de la tension a lieu à l'aide d'un circuit de régulation externe (32), entre le module d'accumulateur (8, 9, 10) et le module central (11).

17. Dispositif de charge selon les revendications 1 à 16, **caractérisé en ce que** le module central (11) comporte
- une adaptation autoadaptative de l'ensemble d'accumulateurs au système prioritaire
- une régulation de répartition de charge
- une analyse de charge, de décharge et de phase de régénération
- une évaluation de capacité et de résistance intérieure
- une surveillance de la température
- un affichage de l'état du système, y compris une sortie de données d'alerte
- une transmission de paramètres aux modules d'accumulateurs.

18. Dispositif de charge selon les revendications 1 à 9, **caractérisé en ce que** les modules d'accumulateurs (8, 9, 10) comportent
- une détection des tensions d'accumulateurs et des gradients
- une détection de la température
- un conditionnement de signaux
- une régulation de dérivation analogique
- un transfert de données.
